# FASCICULE DE BREVET EUROPEEN

(11) **EP 1 133 683 B1**
(45) Date de publication et mention de la délivrance du brevet: **07.06.2006**
(21) Numéro de dépôt: 99956145.9
(22) Date de dépôt: 25.11.1999
(51) Int. Cl.: G01L 9/00

(54) **CAPTEUR DE PRESSION A MEMBRANE COMPORTANT DU CARBURE DE SILICIUM ET PROCEDE DE FABRICATION**
DRUCKWANDLER MIT EINER SILIZIUMKARBIDENTHALTENDEN MEMBRAN UND VERFAHREN ZU SEINER HERSTELLUNG
MEMBRANE PRESSURE SENSOR COMPRISING SILICON CARBIDE AND METHOD FOR MAKING SAME

(30) Priorité: 27.11.1998 FR 9814968
(43) Date de publication de la demande: 19.09.2001
(73) Titulaire: COMMISSARIAT A L'ENERGIE ATOMIQUE, 75752 Paris Cédex 15 (FR)
(72) Inventeur: CLERC, Jean-Frédéric, F-38120 Le Fontanil (FR); JAUSSAUD, Claude, F-38240 Meylan (FR); JOLY, Jean-Pierre, F-38120 Saint Egrève (FR); THERME, Jean, F-38320 Herbeys (FR)
(74) Mandataire: Brykman, Georges
(86) Numéro de dépôt international: PCT/FR1999/002911
(87) Numéro de publication internationale: WO 2000/033044

(56) Documents cités:
- DE-A- 19 601 791
- FR-A- 2 681 472
- US-A- 4 706 100
- US-A- 4 894 635
- US-A- 4 898 035
- US-A- 5 095 401

## Description

### Domaine technique

La présente invention concerne un capteur de pression à membrane comportant du carbure de silicium. Elle concerne également la fabrication de l'élément sensible du capteur.

### Etat de la technique antérieure

Les techniques de la micro-électronique permettent la réalisation de capteurs de pression miniatures par des procédés de fabrication collective. Elles procurent donc des capteurs de dimensions réduites et de faible coût. Elles permettent la réalisation sur un même support d'un capteur et de son électronique associée.

On connaît des capteurs de pression micro-usinés constitués d'une membrane de silicium de quelques dizaines de µm d'épaisseur. La différence de pression entre les deux faces de la membrane peut être détectée par la mesure des contraintes à l'encastrement avec des jauges piézorésistives obtenues par diffusion ou implantation ionique. Ces jauges piézoélectriques présentent une sensibilité élevée et une grande stabilité mécanique due à la structure monocristalline du silicium utilisé. On réalise l'isolation électrique entre chaque jauge et avec le substrat sur lequel elles sont élaborées par des jonctions inverses. Ceci a pour inconvénient de limiter la gamme de température de fonctionnement de ces capteurs à 125°C maximum à cause du courant de fuite élevé de la jonction inverse et d'introduire un niveau de bruit élevé (bruit thermique et bruit de jonction piézoélectrique) ce qui réduit la gamme dynamique. Un autre inconvénient des jauges piézorésistives dans leur utilisation habituelle résulte de l'exposition directe de ces jauges ainsi que des métallisations correspondantes au fluide dont on veut mesurer la pression, ce qui soumet ces éléments aux effets de l'humidité et des agents corrosifs.

On connaît aussi des capteurs de pression à jauges piézorésistives enterrées dans le silicium. Cependant, ces capteurs ne sont pas utilisables pour des températures supérieures à 200°C.

On connaît aussi des capteurs de pression réalisés sur des substrats SOI (silicium-sur-isolant). Ces capteurs ne présentent pas les inconvénients dus aux courants de fuite ou au bruit à cause de la couche isolante intermédiaire. Ils peuvent être utilisés jusqu'à des températures de l'ordre de 400°C.

Les recherches s'orientent actuellement sur des techniques à base de carbure de silicium qui sont susceptibles de fournir des produits pouvant fonctionner jusqu'à des températures de l'ordre de 700°C.

Ces capteurs de pression micro-usinés sont, pour leur utilisation, encapsulés en fonction de leur destination. Les capteurs de pression pour le domaine automobile et ceux destinés à être montés sur une carte sont généralement encapsulés dans des boîtiers du type "dual-in-line" prémoulés. Certains boîtiers peuvent être faits sur mesure, en fonction de l'application visée, en concevant un logement prémoulé en matière thermoplastique pour assurer la meilleurs intégration mécanique possible pour le capteur, et en utilisant la technique "dual chip" pour l'intégration de l'électronique associée. Ce type d'encapsulation offre pratiquement peu de débouchés et la présence de matière thermoplastique impose une température maximale.

L'utilisation de capteurs de pression en milieu hostile nécessite de tenir compte des contraintes imposées par la température, la nature du fluide dont on veut mesurer la pression et en particulier son caractère corrosif. Afin de protéger la membrane du capteur de l'environnement immédiat, l'encapsulation intègre souvent un moyen de transmission hydraulique de la pression à mesurer associant par exemple de l'huile de silicone et une membrane ou un soufflet métallique. Cette solution présente l'inconvénient d'augmenter le coût du capteur. D'autre part, l'huile de silicone ne supporte pas une température supérieure à 300°C. Pour des températures plus élevées, le mercure peut être utilisé, mais il faut tenir compte de son effet nocif sur l'environnement.

En milieu hostile, l'encapsulation peut encore utiliser des matériaux tels que l'acier inoxydable et la céramique afin de protéger la partie silicium du capteur. La membrane du capteur est, quant à elle, protégée du milieu dont on veut mesurer la pression par une autre membrane qui la recouvre directement (ce qui permet un fonctionnement du capteur jusqu'à 300°C) ou par un système de transmission mécanique de la pression utilisant un diaphragme (ce qui permet un fonctionnement du capteur jusqu'à 450°C).

En résumé, certains capteurs de pression utilisant une membrane en silicium peuvent fonctionner jusqu'à des températures maximales de 300°C. En prévoyant une encapsulation spécifique pour le capteur (acier inoxydable, céramique), il est possible de protéger la partie silicium du capteur des milieux chimiquement agressifs et d'étendre la gamme de température de fonctionnement jusqu'à 450°C.

Le brevet US-A-4 898 035 divulgue un capteur de pression à céramique, en particulier pour mesurer la pression dans un cylindre d'un moteur à combustion interne. Ce capteur comprend un élément sensible intégrant une membrane, une première face de la membrane étant destinée à être mise au contact du milieu dont on veut mesurer la pression. La seconde face de la membrane supporte des moyens de détection d'une déformation de la membrane reliés à des conducteurs électriques non représentés. La membrane étant en céramique, sa surface destinée à être au contact du milieu hostile est chimiquement inerte par rapport à ce milieu. Le support de l'élément sensible supporte cet élément de façon que l'une des faces de la membrane est au contact du milieu hostile et que la face opposée est soustraite à ce contact. Le support et le disque annulaire sont métalliques. L'étanchéité entre l'intérieur de l'élément sensible et son support est assurée par la couche de liaison en verre ou en matériau de brasage

Le brevet US-A-4 894 635 divulgue un capteur de contrainte, par exemple un capteur de pression. Ce capteur est destiné à fonctionner à température élevée. Il est aussi destiné à une utilisation en un milieu hostile tel que celui des moteurs de véhicule. L'élément sensible est constitué à partir d'un substrat en céramique. Il comprend une membrane dont une face est exposée au milieu dont on veut mesurer la pression et dont l'autre face supporte les moyens de détection. Des pièces servent de support à l'élément sensible. Elles mettent l'une des faces de la membrane au contact dudit milieu et évitent à la face opposée de la membrane d'être au contact de ce milieu. L'étanchéité est assurée par un joint torique.

Le document DE-A-196 01 791 divulgue un détecteur à membrane et son procédé de fabrication. Le détecteur est une structure micro-usinée comportant une membrane déformable solidaire d'une partie périphérique permettant sa déformation. La membrane comprend une couche en SiC et une couche en SiO₂. Les éléments de détection sont situés sur la couche électriquement isolante.

Le brevet US-A-4 706 100 divulgue un capteur de pression piézorésistif comprenant : un substrat de silicium monocristallin, une couche épitaxiée de β-SiC monocristallin, des résistances piézoélectriques formées par diffusion ou implantation dans la couche épitaxiée, des contacts électriques pour connecter les résistances piézoélectriques et une cavité formée sur la face arrière du substrat pour former une membrane.

### Exposé de l'invention

La présente invention a été conçue pour remédier aux inconvénients présentés par les capteurs de pression de l'art antérieur. Elle permet la réalisation d'un capteur de pression miniature, fabriqué par des procédés de fabrication collective, compatible avec une tenue en environnement sévère (température élevée, milieu de mesure chimiquement agressif), compatible avec une encapsulation simplifiée et de faible coût de fabrication.

L'invention a donc pour objet un capteur de pression capable de fonctionner à haute température et de mesurer la pression d'un milieu hostile, comportant :
- un élément sensible intégrant une membrane en carbure de silicium monocristallin et réalisé par micro-usinage d'un substrat en carbure de silicium polycristallin, une première face de la membrane étant destinée à être mise au contact dudit milieu, une seconde face de la membrane comprenant des moyens de détection d'une déformation de la membrane reliés à des contacts électriques pour la connexion de moyens de liaison électrique, les surfaces de l'élément sensible destinées à être au contact dudit milieu étant chimiquement inertes par rapport à ce milieu ;
- un support de l'élément sensible supportant l'élément sensible de façon que ladite première face de la membrane puisse être mise au contact dudit milieu et que la seconde face de la membrane puisse être soustraite du contact avec ledit milieu, le support étant en carbure de silicium polycristallin ;
- un cordon d'étanchéité, en matériau contenant du carbure de silicium, brasé entre le support et l'élément sensible pour préserver la seconde face de la membrane de tout contact avec ledit milieu.

Si le capteur est destiné à la mesure de pression absolue, le support peut comprendre un élément de fermeture scellé afin de pouvoir faire le vide à l'intérieur du support.

Avantageusement, le support est en forme de tube, l'élément sensible fermant l'une des extrémités du tube, la première face de la membrane étant dirigée vers l'extérieur du tube. Il peut alors comporter un filetage permettant de le visser sur un réservoir contenant le milieu.

Il peut être prévu une couche d'interface isolante entre la membrane et la partie substrat de l'élément sensible. Cette couche d'interface isolante peut être en un matériau choisi parmi l'oxyde de silicium, le nitrure de silicium et le silicium carboné.

Les contacts électriques équipant les moyens de détection peuvent être en un siliciure comprenant du tungstène. La connexion entre les contacts électriques et les moyens de liaison électrique peut être obtenue par un matériau de soudure supportant les températures élevées. Ce matériau de soudure peut être un siliciure comprenant du tungstène. Il peut aussi être prévu des moyens conducteurs formant ressort pour assurer la connexion entre les contacts électriques et les moyens de liaison électrique.

Les moyens de détection peuvent comprendre au moins deux jauges piézorésistives, par exemple en carbure de silicium monocristallin.

L'invention a aussi pour objet un procédé de fabrication par micro-usinage d'au moins un élément sensible à membrane pour capteur de pression capable de fonctionner à haute température et de mesurer la pression d'un milieu hostile, comportant les étapes suivantes :
- la fourniture d'un support comprenant une face avant présentant une partie périphérique en carbure de silicium polycristallin et une face arrière opposée à la face avant,
- la réalisation d'une couche de carbure de silicium monocristallin sur ladite face avant du support,
- la constitution de moyens de détection de la déformation d'une membrane, sur la face libre de la couche de carbure de silicium monocristallin,
- la réalisation de contacts électriques sur la face libre de la couche de carbure de silicium monocristallin pour connecter les moyens de détection à des moyens de liaison électrique,
- la formation de la membrane dudit élément sensible par élimination de matière à partir de la face arrière du support et de manière à ne conserver que ladite partie périphérique en carbure de silicium polycristallin.

Le support peut être un substrat en carbure de silicium polycristallin.

La réalisation de ladite couche de carbure de silicium monocristallin peut comprendre :
- le report d'une première couche de carbure de silicium monocristallin sur ladite face avant du support,
- le dépôt par épitaxie d'une deuxième couche de carbure de silicium monocristallin sur la première couche afin d'obtenir ladite couche de carbure de silicium monocristallin d'épaisseur contrôlée.

La réalisation de ladite couche de carbure de silicium monocristallin peut comprendre l'utilisation d'une plaquette de carbure de silicium monocristallin dans laquelle une couche a été définie par une couche de micro-cavités générées par implantation ionique, ladite plaquette étant collée sur ladite face avant du support puis clivée au niveau de la couche de microcavités pour ne conserver que ladite couche définie sur le substrat. De préférence, le clivage de la plaquette est obtenu par la coalescence des microcavités résultant d'un traitement thermique. De préférence également, le collage de ladite plaquette sur le substrat est obtenu par adhésion moléculaire.

Avant l'étape de réalisation de ladite couche de carbure de silicium monocristallin, une couche d'interface isolante peut être déposée sur la face du substrat sur laquelle sera réalisée ladite couche.

Lors de l'étape de formation de la membrane, l'élimination de matière à partir de la face arrière du support peut être menée par une opération choisie parmi l'usinage mécanique et la gravure chimique.

Selon une variante de réalisation, l'étape de structure d'un support peut comporter les étapes préliminaires suivantes :
- l'usinage d'un substrat pour obtenir un bossage de forme complémentaire à la forme de l'élément sensible désiré vu du côté du milieu hostile,
- le dépôt d'une couche en carbure de silicium polycristallin sur le substrat côté bossage,
- l'arasement de la couche déposée précédemment jusqu'à atteindre le sommet du bossage, pour constituer ladite face avant du support.

La couche de matériau chimiquement inerte déposée sur le substrat côté bossage doit être suffisamment épaisse pour assurer une bonne tenue mécanique lorsque le substrat initial aura été retiré.

Le substrat peut être en silicium.

La réalisation de ladite couche de carbure de silicium monocristallin peut comprendre :
- le report d'une première couche de carbure de silicium monocristallin sur ladite face avant du support,
- le dépôt par épitaxie d'une deuxième couche de carbure de silicium monocristallin sur la première couche de carbure de silicium monocristallin afin d'obtenir ladite couche de carbure de silicium monocristallin d'épaisseur contrôlée.

Avantageusement, l'étape de dépôt d'une couche de carbure de silicium polycristallin peut être réalisée par exemple par CVD. L'étape d'arasement peut être réalisée par polissage mécano-chimique.

Selon cette variante du procédé, la réalisation de ladite couche de carbure de silicium monocristallin comprend l'utilisation d'une plaquette de carbure de silicium monocristallin dans laquelle une couche a été définie par une couche de microcavités générées par implantation ionique, ladite plaquette étant collée sur le substrat côté couche arasée puis clivée au niveau de la couche de microcavités pour ne conserver que ladite couche définie sur le substrat. De préférence, le clivage de la plaquette est obtenu par la coalescence des microcavités résultant d'un traitement thermique. De préférence également, le collage de ladite plaquette sur le substrat est obtenu par adhésion moléculaire.

Avant l'étape de réalisation de ladite couche de carbure de silicium monocristallin, une couche d'interface isolante peut être déposée sur la face du substrat sur laquelle sera réalisée ladite couche.

Lors de l'étape de formation de la membrane, l'élimination du substrat peut être obtenue par gravure chimique.

Selon une autre variante de réalisation, l'étape de fourniture d'un support peut comprendre les étapes prélimnaires suivantes :
- l'usinage d'un substrat pour obtenir un bossage de forme complémentaire à la forme de l'élément sensible désiré vu du côté du milieu hostile,
- le dépôt d'une couche de carbure de silicium polycristallin sur le substrat côté bossage,
- l'arasement de la couche déposée précédemment jusqu'à laisser subsister au-dessus du bossage l'épaisseur désirée pour la membrane, pour constituer ladite face avant du support.

Le substrat peut être en silicium.

Avantageusement, l'étape de dépôt d'une couche de carbure de silicium polycristallin peut être réalisée par exemple par CVD. L'étape d'arasement peut être réalisée par polissage mécano-chimique.

Selon cette autre variante du procédé, la réalisation de la couche de carbure de silicium monocristallin peut être obtenue à partir d'une plaquette de carbure de silicium monocristallin dans laquelle ladite couche a été définie par une couche de microcavités générées par implantation ionique, ladite plaquette étant collée sur le substrat côté couche arasée puis clivée au niveau de la couche de microcavités pour ne conserver que la couche de carbure de silicium monocristallin sur le substrat. De préférence, le clivage de la plaquette est obtenu par la coalescence des microcavités résultant d'un traitement thermique. De préférence également, le collage de ladite plaquette sur le substrat est obtenu par adhésion moléculaire.

Lors de l'étape de formation de la membrane, l'élimination du substrat de silicium peut être obtenue par gravure chimique.

Une couche d'interface isolante peut être déposée sur la couche arasée avant d'y réaliser ladite couche de carbure de silicium monocristallin.

Si le procédé selon l'inveation est un procédé de fabrication collective d'éléments sensibles à partir d'un même substrat, il peut être prévu une étape finale de découpe du substrat pour obtenir des éléments sensibles séparés.

### Brève description des dessins

L' invention sera mieux comprise et d'autres avantages et particularités apparaîtront à la lecture de la description qui va suivre, donnée à titre d'exemple non limitatif, accompagnée des dessins annexés parmi lesquels :
- la figure 1 est une vue en coupe axiale d'un capteur de pression à membrane, du type à pression relative, selon la présente invention,
- la figure 2 est une vue en coupe axiale d'un capteur de pression à membrane, du type à pression absolue, selon la présente invention,
- les figures 3A à 3D illustrent un premier procédé de réalisation d'éléments sensibles pour capteurs de pression selon la présente invention,
- les figures 4A à 4E illustrent un deuxième procédé de réalisation d'éléments sensibles pour capteurs de pression selon la présente invention,
- les figures 5A à 5C illustrent un troisième procédé de réalisation d'éléments sensibles pour capteurs de pression selon la présente invention.

### Description détaillée de modes de réalisation de l'invention

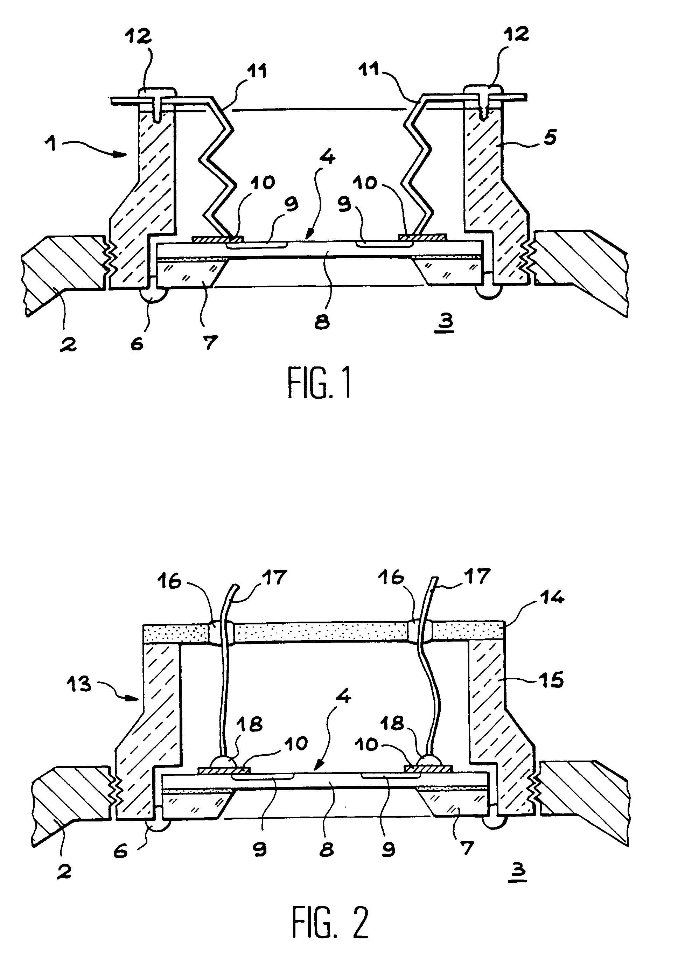

La figure 1 montre un capteur de pression 1, selon l'invention, monté sur un orifice ouvert dans la paroi 2 d'un réservoir (il peut s'agir d'un cylindre de moteur). L'intérieur 3 du réservoir contient un milieu hostile dont on veut mesurer la pression. Le capteur de pression 1 comprend un élément sensible 4 fixé à une extrémité d'un support 5 grâce à un cordon d'étanchéité 6.

Le support 5 est, dans cet exemple de réalisation, de forme tubulaire. Cette forme permet de le fixer aisément, par vissage, dans un logement approprié de la paroi 2 du réservoir. L'élément sensible 4 est fixé par sa périphérie à l'extrémité du support 5 située du côté du réservoir. La face de l'élément sensible située vers l'intérieur du réservoir 2 est donc soumise à la pression interne du réservoir et la face opposée de l'élément sensible est soumise à la pression externe.

L'élément sensible 4 comporte une partie périphérique 7 plus épaisse et une partie centrale plus mince ou membrane 8. L'élément sensible est prévu, en fonction de la gamme de pression à mesurer, pour que la partie périphérique 7 ne se déforme pas, ou pratiquement pas, tandis que la partie centrale ou membrane 8 va se déformer. La déformation de la membrane 8 est détectée grâce à des éléments de détection 9, par exemple des jauges piézorésistives situées sur la face de la membrane 8 non soumise au milieu hostile. L'élément sensible 4 comprend également, sur sa face non soumise au milieu hostile, des contacts électriques 10 assurant la connexion entre les jauges piézorésistives et un circuit électronique d'exploitation des signaux délivrés par les jauges.

Cette connexion électrique doit se faire en tenant compte de la température élevée à laquelle le capteur de pression peut être soumis. On peut, comme cela est représenté sur la figure 1, utiliser un fil métallique exerçant une pression sur le contact électrique. Ainsi les fils 11, maintenus grâce à des vis en céramique 12 sur le support 5, permettent la connexion électrique avec les contacts 10 par effet ressort. On peut également souder les fils électriques sur les contacts au moyen d'une soudure supportant les hautes températures, par exemple en utilisant un matériau composé d'un siliciure comprenant du tungstène.

Le support 5 peut être réalisé à partir d'un tube de carbure de silicium. L'élément sensible peut être réalisé par l'un des procédés décrits dans la suite de la description. Au moins les jauges piézorésistives sont réalisées en carbure de silicium monocristallin.

Le cordon d'étanchéité 6 par exemple brasé entre la partie périphérique 7 de l'élément sensible et le support 5 peut être exécuté par l'un des procédés divulgués dans les documents FR-A-2 749 787 (Procédé d'assemblage à l'aide d'un joint épais de pièces en matériaux à base de SiC par brasage réfractaire et joint réfractaire et épais ainsi obtenu) ou FR-A-2 748 471 (Assemblage par brasage de matériaux céramiques contenant du carbure de silicium). Ces procédés permettent de braser directement des éléments en carbure de silicium entre eux. On peut alors réaliser un capteur de pression haute température sans utiliser de boîtier en acier inoxydable/céramique et placer la membrane de l'élément sensible en contact direct avec le milieu dont on veut mesurer la pression. Cette solution permet de réaliser un capteur à plus faible coût et plus précis, puisqu'il n'implique pas de fonction de transfert due au boîtier.

Le capteur de pression 13 de la figure 2 comprend des éléments qui sont identiques à des éléments du capteur de la figure 1. Ces éléments portent les mêmes numéros de référence.

Un élément de fermeture 14, par exemple en céramique, est scellé sur l'extrémité du support 15 opposée à l'élément sensible 4. Il permet de faire le vide à l'intérieur du support. Il comporte deux passages étanches 16 permettant l'introduction à l'intérieur du support 15 de fils électriques 17 destinés à être connectés aux contacts 10. Dans cet exemple, la liaison des fils électriques 17 sur les contacts 10 se fait par des soudures haute température 18.

L'élément sensible peut être fabriqué de manière collective à partir d'un substrat initial. Après achèvement des différentes étapes du procédé de réalisation, le substrat final est découpé pour fournir des éléments sensibles sous forme de puces qui sont alors montés sur leurs supports.

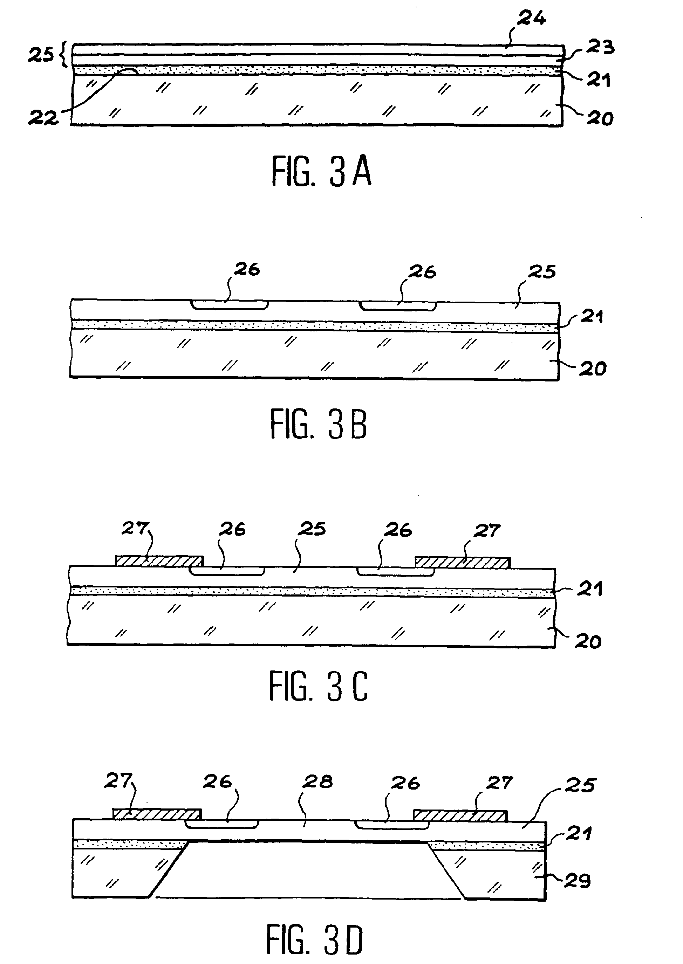

Les figures 3A à 3D sont des vues en coupe qui illustrent un premier procédé de réalisation des éléments sensibles. Par souci de simplification, on a représenté la réalisation d'un seul élément sensible.

Ce premier procédé utilise comme substrat initial 20 (voir la figure 3A), un substrat dit passif c'est-à-dire chimiquement inerte par rapport au milieu auquel il est destiné pour en mesurer la pression. Le substrat 20 est en carbure de silicium polycristallin. Une couche d'interface isolante 21, par exemple en oxyde de silicium, a été réalisé par exemple par dépôt sur la face 22 du substrat 20. Une première couche 23 de carbure de silicium monocristallin est reportée sur la couche d'interface isolante 21. Ce report peut avantageusement être réalisé par le procédé de transfert divulgué par la demande FR-A-2 681 472. Selon ce procédé de transfert, une plaquette de carbure de silicium monocristallin est bombardée par des ions (d'hydrogène par exemple) de façon à créer à l'intérieur de la plaquette une couche de microcavités parallèle à l'une de ses faces principales. La couche de microcavités est située à une profondeur correspondant à l'épaisseur de la couche que l'on veut reporter. La plaquette est ensuite collée sur le substrat 20 de façon que la couche à reporter soit au contact de la couche d'interface 21. Le collage peut se faire par la méthode d'adhésion moléculaire. Par un traitement thermique approprié, on provoque la coalescence des microcavités et le clivage de la plaquette le long de la couche de microcavités. On obtient alors une couche 23 adhérant au substrat 20, séparée du reste de la plaquette.

Si la couche ainsi obtenue possède un dopage et une épaisseur ne permettant pas une bonne lecture de la gamme de pression par les jauges piézorésistives, on peut faire le dépôt par épitaxie d'une deuxième couche 24 de carbure de silicium monocristallin qui permet de contrôler l'épaisseur et le dopage désirés pour la membrane. Les deux couches de carbure de silicium monocristallin seront par la suite désignées sous la seule référence 25.

Comme le montre la figure 3B, des jauges piézorésistives 26 sont alors constituées à des endroits de la couche 25 déterminés en fonction de la forme de la future membrane. Ces jauges piézorésistives sont réalisées par une méthode connue de l'homme de l'art, par exemple par implantation ionique et recuit.

On dépose ensuite sur la couche 25 une couche conductrice (par exemple un siliciure contenant du tungstène) qui est ensuite gravée pour constituer des contacts électriques 27 avec les jauges piézorésistives 26 (voir la figure 3C).

Le substrat 20 est ensuite usiné localement au droit des jauges à partir de sa face arrière jusqu'à atteindre la couche de carbure de silicium monocristallin 25 afin de constituer, pour chaque élément sensible, une membrane 28 rattachée à une partie périphérique 29. Une découpe transversale du substrat final permet de séparer les éléments sensibles (voir la figure 3D).

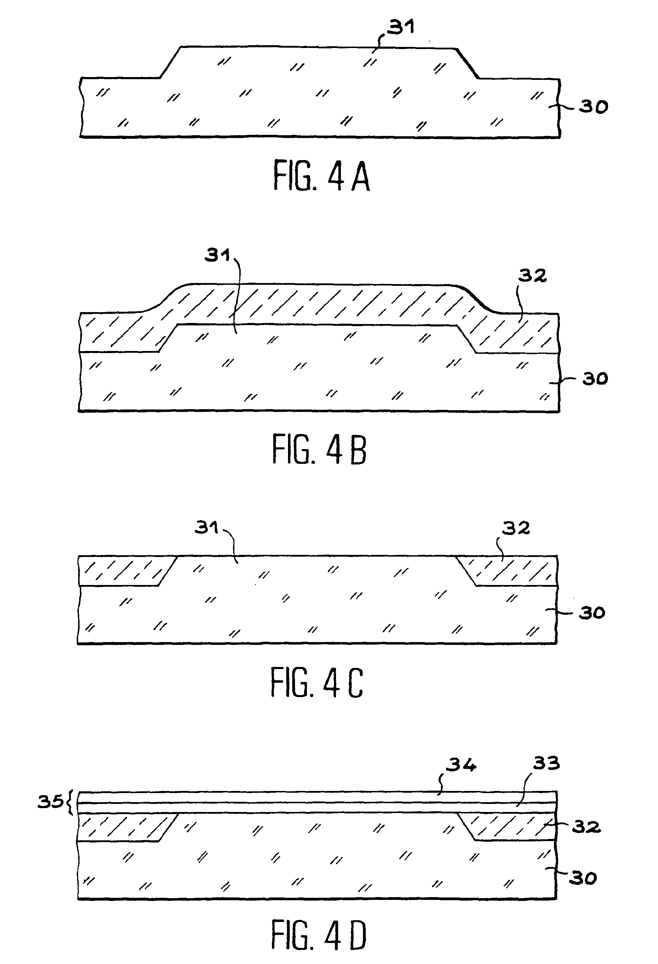

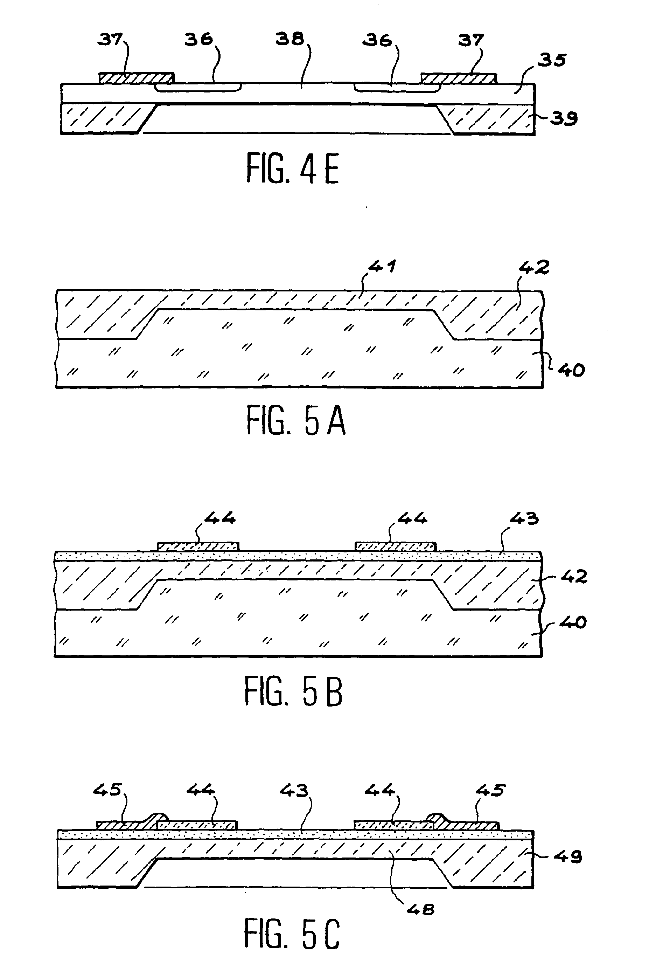

Les figures 4A à 4E sont des vues en coupe qui illustrent un deuxième procédé de réalisation des éléments sensibles. Pour la même raison que précédemment, on a représenté la réalisation d'un seul élément sensible.

La figure 4A montre un substrat par exemple en silicium 30 qui a été usiné, par exemple par gravure chimique, pour pourvoir sa face supérieure de bossages 31 de forme tronconique. A chaque bossage 31 correspond la réalisation d'un élément sensible. On peut employer en particulier la gravure utilisant des bases (par exemple KOH), permettant à partir d'un substrat en silicium d'orientation (100) d'usiner des cavités avec des bords orientés selon les plans (111) à 54°.

On dépose ensuite, sur la face supérieure du substrat 30, une couche 32 de carbure de silicium polycristallin qui épouse la surface bosselée du substrat 30 (voir la figure 4B). La couche 32 peut être déposée grâce à une technique CVD (dépôt chimique en phase vapeur).

Le substrat ainsi recouvert est ensuite arasé, par exemple par polissage mécano-chimique, pour obtenir la structure représentée à la figure 4C. Chaque sommet de bossage est découvert et chaque bossage 31 est entouré de carbure de silicium polycristallin 32.

Comme pour le premier procédé décrit, une première couche 33 de carbure de silicium monocristallin est reportée sur le substrat arasé. Une deuxième couche 34 de carbure de silicium monocristallin peut éventuellement être épitaxiée sur la première couche 33. Les couches 33 et 34 constituent la couche 35 de carbure de silicium monocristallin (voir la figure 4D). La couche épitaxiée 34 permet de contrôler l'épaisseur de la membrane.

On forme ensuite, de la même manière que pour le premier procédé décrit, les jauges piézorésistives 36 et leurs contacts électriques 37 (voir la figure 4E). Le substrat initial en silicium 30 est alors éliminé, par exemple par gravure chimique. On obtient alors des éléments sensibles comprenant une membrane 38 rattachée à une partie périphérique 39. Une découpe transversale du substrat final permet de séparer les éléments sensibles.

Les figures 5A à 5C sont des vues en coupe qui illustrent un troisième procédé de réalisation des éléments sensibles. Pour la même raison que précédemment, on a représenté la réalisation d'un seul élément sensible.

Ce troisième procédé débute comme le deuxième procédé. Des bossages 41 de forme tronconique sont réalisés sur la face supérieure d'un substrat 40 par exemple en silicium. Une couche 42 de carbure de silicium polycristallin est ensuite déposée par exemple par une technique CVD et arasée. Comme le montre la figure 5A, l'arasement ne concerne que la couche 42. Il peut être réalisé par polissage mécano-chimique afin de bien contrôler l'épaisseur de carbure de silicium polycristallin située au-dessus des bossages 41.

On dépose ensuite, sur la couche 42, une couche d'interface isolante 43 (par exemple en silice) comme cela est montré sur la figure 5B. Une couche de carbure de silicium monocristallin est reportée sur la couche d'interface 43 par exemple selon le procédé de transfert divulgué par le document FR-A-2 681 472 déjà cité. L'étape d'épitaxie des procédés décrits précédemment n'est pas nécessaire. Des jauges piézorésistives 44 sont formées dans cette couche de carbure de silicium monocristallin.

Comme le montre la figure 5C, des contacts électriques 45 sont fournis aux jauges piézorésistives 44. Le substrat initial 40 en silicium est alors éliminé, par exemple par gravure chimique, on obtient alors des éléments sensibles comprenant une membrane circulaire 48 rattachée à une partie périphérique 49. Une découpe transversale du substrat final permet de séparer les éléments sensibles.

La mise en oeuvre dans ces trois procédés de réalisation de la méthode de transfert de couche selon le document FR-A-2 681 472 permet de réaliser une membrane comprenant du sic monocristallin sur un substrat passif de nature différente. La membrane en Sic présente les avantages intrinsèques suivants : inertie chimique et tenue aux environnements chimiquement agressifs, tenue à haute température, bonne tenue mécanique, bonne tenue électrique des jauges. Le substrat passif peut être choisi en fonction de l'application. Par exemple, un substrat en SiC polycristallin présentera les mêmes propriétés chimiques et mécaniques que la membrane et constitue un bon choix pour des applications en milieu hostile.

## Revendications

1. Capteur de pression (1, 13) capable de fonctionner à haute température et de mesurer la pression d'un milieu hostile, **caractérisé en ce qu'**il comporte :
- un élément sensible (4) intégrant une membrane (8) en carbure de silicium monocristallin et réalisé par micro-usinage d'un substrat en carbure de silicium polycristallin, une première face de la membrane étant destinée à être mise au contact dudit milieu, une seconde face de la membrane comprenant des moyens de détection (9) d'une déformation de la membrane reliés à des contacts électriques (10) pour la connexion de moyens de liaison électrique (11, 17), les surfaces de l'élément sensible (4) destinées à être au contact dudit milieu étant chimiquement inertes par rapport à ce milieu ;
- un support (5, 15) de l'élément sensible (4) supportant l'élément sensible de façon que ladite première face de la membrane (8) puisse être mise au contact dudit milieu et que la seconde face de la membrane (8) puisse être soustraite du contact avec ledit milieu, le support (5, 15) étant en carbure de silicium polycristallin ;
- un cordon d'étanchéité (6), en matériau contenant du carbure de silicium, brasé entre le support (5, 15) et l'élément sensible (4) pour préserver la seconde face de la membrane (8) de tout contact avec ledit milieu.

2. Capteur de pression selon la revendication 1, **caractérisé en ce que**, le capteur (13) étant destiné à la mesure de pression absolue, le support (15) comprend un élément de fermeture (14) scellé afin de pouvoir faire le vide à l'intérieur du support.

3. Capteur de pression selon l'une des revendications 1 ou 2, **caractérisé en ce que** le support (5, 15) est en forme de tube, l'élément sensible (4) fermant l'une des extrémités du tube, la première face de la membrane (8) étant dirigée vers l'extérieur du tube.

4. Capteur de pression selon la revendication 3, **caractérisé en ce que** le support (5, 15) comporte un filetage permettant de le visser sur un réservoir (2) contenant le milieu.

5. Capteur de pression selon l'une quelconque des revendications 1 à 4, **caractérisé en ce qu'**il est prévu une couche d'interface isolante entre la membrane (8) et la partie substrat de l'élément sensible (4).

6. Capteur de pression selon la revendication 5, **caractérisé en ce que** la couche d'interface isolante est en un matériau choisi parmi l'oxyde de silicium, le nitrure de silicium et le silicium carboné.

7. Capteur de pression selon l'une quelconque des revendications 1 à 6, **caractérisé en ce que** lesdits contacts électriques (10) sont en un siliciure comprenant du tungstène.

8. Capteur de pression selon l'une quelconque des revendications 1 à 7, **caractérisé en ce que** la connexion entre les contacts électriques (10) et les moyens de liaison électrique (17) est obtenue par un matériau de soudure (18) supportant les températures élevées.

9. Capteur de pression selon la revendication 8, **caractérisé en ce que** ledit matériau de soudure (18) est un siliciure comprenant du tungstène.

10. Capteur de pression selon l'une quelconque des revendications 1 à 7, **caractérisé en ce qu'**il est prévu des moyens conducteurs (11) formant ressort pour assurer la connexion entre les contacts électriques (10) et les moyens de liaison électrique.

11. Capteur de pression selon l'une quelconque des revendications 1 à 10, **caractérise en ce que** lesdits moyens de détection (9) comprennent au moins deux jauges piézorésistives.

12. Capteur de pression selon la revendication 11, **caractérisé en ce que** lesdites jauges piézorésistives sont en carbure de silicium monocristallin.

13. Procédé de fabrication par micro-usinage d'au moins un élément sensible à membrane pour capteur de pression capable de fonctionner à haute température et de mesurer la pression d'un milieu hostile, comportant les étapes suivantes :
- la fourniture d'un support (20) comprenant une face avant (22) présentant une partie périphérique en carbure de silicium polycristallin et une face arrière opposée à la face avant,
**caractérisé en ce qu'**il comprend :
- la réalisation d'une couche de carbure de silicium monocristallin (25) sur ladite face avant (22) du support (20),
- la constitution de moyens de détection (26) de la déformation d'une membrane, sur la face libre de la couche (25) de carbure de silicium monocristallin,
- la réalisation de contacts électriques (27) sur la face libre de la couche (25) de carbure de silicium monocristallin pour connecter les moyens de détection (26) à des moyens de liaison électrique,
- la formation de la membrane (28) dudit élément sensible par élimination de matière à partir de la face arrière du support et de manière à ne conserver que ladite partie périphérique en carbure de silicium polycristallin.

14. Procédé selon la revendication 13, **caractérisé en ce que** le support est un substrat en carbure de silicium polycristallin (20).

15. Procédé selon la revendication 14, **caractérisé en ce que** la réalisation de ladite couche (25) de carbure de silicium monocristallin comprend :
- le report d'une première couche de carbure de silicium monocristallin sur ladite face avant du support (20),
- le dépôt par épitaxie d'une deuxième couche (24) de carbure de silicium monocristallin sur la première couche (23) afin d'obtenir ladite couche (25) de carbure de silicium monocristallin d'épaisseur contrôlée.

16. Procédé selon la revendication 14, **caractérisé en ce que** la réalisation de ladite couche de carbure de silicium monocristallin comprend l'utilisation d'une plaquette de carbure de silicium monocristallin dans laquelle une couche a été définie par une couche de microcavités générées par implantation ionique, ladite plaquette étant collée sur ladite face avant du support (20) puis clivée au niveau de la couche de microcavités pour ne conserver que ladite couche définie sur le substrat.

17. Procédé selon la revendication 16, **caractérisé en ce que** le clivage de la plaquette est obtenu par la coalescence des microcavités résultant d'un traitement thermique.

18. Procédé selon l'une des revendications 16 ou 17, **caractérisé en ce que** le collage de ladite plaquette sur le substrat (20) est obtenu par adhésion moléculaire.

19. Procédé selon l'une quelconque des revendications 14 à 18, **caractérisé en ce que**, avant l'étape de réalisation de ladite couche de carbure de silicium monocristallin (25), une couche d'interface isolante (21) est déposée sur la face (22) du substrat (20) sur laquelle sera réalisée ladite couche (25).

20. Procédé selon l'une quelconque des revendications 13 à 19, **caractérisé en ce que**, lors de l'étape de formation de la membrane (28), l'élimination de matière à partir de la face arrière du support est menée par une opération choisie parmi l'usinage mécanique et la gravure chimique.

21. Procédé selon la revendication 13, **caractérisé en ce que** l'étape de fourniture d'un support comporte les étapes suivantes :
- l'usinage d'un substrat (30) pour obtenir un bossage (31) de forme complémentaire à la forme de l'élément sensible désiré vu du côté du milieu hostile,
- le dépôt d'une couche (32) en carbure de silicium polycristallin sur le substrat (30) côté bossage (31) ,
- l'arasement de la couche (32) déposée précédemment jusqu'à atteindre le sommet du bossage (31) pour constituer ladite face avant du support.

22. Procédé selon la revendication 21, **caractérisé en ce que** ledit substrat (30) est en silicium.

23. Procédé selon l'une des revendications 21 ou 22, **caractérisé en ce que** la réalisation de ladite couche (35) de carbure de silicium monocristallin comprend :
- le report d'une première couche (33) de carbure de silicium monocristallin sur ladite face avant du support,
- le dépôt par épitaxie d'une deuxième couche (34) de carbure de silicium monocristallin sur la première couche (33) de carbure de silicium monocristallin afin d'obtenir ladite couche (35) de carbure de silicium monocristallin d'épaisseur contrôlée.

24. Procédé selon l'une quelconque des revendications 21 à 23, **caractérisé en ce que** l'étape d'arasement est réalisée par polissage mécano-chimique.

25. Procédé selon l'une des revendications 21 ou 22, **caractérisé en ce que** la réalisation de ladite couche (33) de carbure de silicium monocristallin comprend l'utilisation d'une plaquette de carbure de silicium monocristallin dans laquelle une couche a été définie par une couche de microcavités générées par implantation ionique, ladite plaquette étant collée sur le substrat (30) côté couche arasée puis clivée au niveau de la couche de microcavités pour ne conserver que ladite couche définie sur le substrat.

26. Procédé selon la revendication 25, **caractérisé en ce que** le clivage de la plaquette est obtenu par la coalescence des microcavités résultant d'un traitement thermique.

27. Procédé selon l'une des revendications 25 ou 26, **caractérisé en ce que** le collage de ladite plaquette sur le substrat est obtenu par adhésion moléculaire.

28. Procédé selon l'une quelconque des revendications 21 à 27, **caractérisé en ce que**, avant l'étape de réalisation de ladite couche de carbure de silicium monocristallin (35) , une couche d'interface isolante est déposée sur la face du substrat sur laquelle sera réalisée ladite couche.

29. Procédé selon l'une quelconque des revendications 21 à 28, **caractérisé en ce que** l'élimination du substrat (30) est obtenue par gravure chimique.

30. Procédé selon la revendication 13, **caractérisé en ce que** l'étape de fourniture d'un support comprend les étapes suivantes :
- l'usinage d'un substrat (40) pour obtenir un bossage (41) de forme complémentaire à la forme de l'élément sensible désiré vu du côté du milieu hostile,
- le dépôt d'une couche (42) de carbure de silicium polycristallin sur le substrat (40) côté bossage (41),
- l'arasement de la couche (42) déposée précédemment jusqu'à laisser subsister au-dessus du bossage (41) l'épaisseur désirée pour la membrane pour constituer ladite face avant du support.

31. Procédé selon la revendication 30, **caractérisé en ce que** ledit substrat (40) est en silicium.

32. Procédé selon l'une des revendications 30 ou 31, **caractérisé en ce que** l'étape d'arasement est réalisée par polissage mécano-chimique.

33. Procédé selon l'une quelconque des revendications 29 à 31, **caractérisé en ce que** la réalisation de ladite couche de carbure de silicium monocristallin est obtenue à partir d'une plaquette de carbure de silicium monocristallin dans laquelle ladite couche a été définie par une couche de microcavités générées par implantation ionique, ladite plaquette étant collée sur le substrat côté couche arasée puis clivée au niveau de la couche de microcavités pour ne conserver que la couche de carbure de silicium monocristallin sur le substrat.

34. Procédé selon la revendication 33, **caractérisé en ce que** le clivage de la plaquette est obtenu par la coalescence des microcavités résultant d'un traitement thermique.

35. Procédé selon l'une des revendications 33 ou 34, **caractérisé en ce que** le collage de ladite plaquette sur le substrat est obtenu par adhésion moléculaire.

36. Procédé selon l'une quelconque des revendications 29 à 34, **caractérisé en ce que** l'élimination du substrat est obtenue par gravure chimique.

37. Procédé selon l'une quelconque des revendications 30 à 36, **caractérisé en ce qu'**une couche d'interface isolante (43) est déposée sur la couche arasée avant d'y réaliser ladite couche de carbure de silicium monocristallin.

38. Procédé selon l'une quelconque des revendications 13 à 37, **caractérisé en ce que**, le procédé étant un procédé de fabrication collective d'éléments sensibles à partir d'un même substrat , il est prévu une étape finale de découpe du substrat pour obtenir des éléments sensibles séparés.

## Claims

1. Pressure sensor (1, 13), able to operate at high temperature and to measure the pressure of a hostile medium, **characterized in that** it comprises:
- a sensing element (4) integrating a membrane (8) in monocrystalline silicon carbide and made by micro-machining a substrate in polycrystalline silicon carbide, a first surface of the membrane being intended to be in contact with said medium, a second surface of the membrane comprising detection means (9) to detect membrane deformation and connected to electric contacts (10) to connect electric connection means (11, 17), the surfaces of the sensing element (4) intended to be in contact with the said medium being chemically inert relative to this medium;
- a carrier (5, 15) for the sensing element (4) supporting the sensing element so that said first surface of the membrane (8) may be placed in contact with said medium and said second surface of the membrane (8) may be shielded from contact with said medium, the carrier (5, 15) being in polycrystalline silicon carbide;
- a seal strip (6), in material containing silicon carbide, brazed between the carrier (5, 15) and the sensing element (4) to shield the second surface of the membrane (8) from any contact with said medium.

2. Pressure sensor according to claim 1, **characterized in that** sensor (13) being intended to measure absolute pressure, the carrier (15) comprises a sealed closing part (14) so that a vacuum may be set up inside the carrier.

3. Pressure sensor according to either of claims 1 or 2, **characterized in that** the carrier (5, 15) is tube-shaped, the sensing element (4) closes one of the tube ends, the first surface of the membrane (8) being directed towards the outside of the tube.

4. Pressure sensor according to claim 3, **characterized in that** the carrier (5, 15) comprises a thread so that it can be screwed to a reservoir (2) containing the medium.

5. Pressure sensor according to any of claims 1 to 4, **characterized in that** an insulating interface layer is provided between the membrane (8) and the substrate part of the sensing element (4).

6. Pressure sensor according to claim 5, **characterized in that** the insulating interface layer is in a material chosen from among silicon oxide, silicon nitride and carbon-containing silicon.

7. Pressure sensor according to any of claims 1 to 6, **characterized in that** said electric contacts (10) are in a silicide containing tungsten.

8. Pressure sensor according to any of claims 1 to 7, **characterized in that** the connection between the electric contacts (10) and the electric connection means (17) is obtained with a solder material (18) which withstands high temperatures.

9. Pressure sensor according to claim 8, **characterized in that** said solder material (18) is a silicide containing tungsten.

10. Pressure sensor according to any of claims 1 to 7, **characterized in that** conductor means (11) are provided, forming a spring to ensure the connection between the electric contacts (10) and the electric connection means.

11. Pressure sensor according to any of claims 1 to 10, **characterized in that** said detection means (9) comprise at least two piezoresistive gauges.

12. Pressure sensor according to claim 11, **characterized in that** said piezoresistive gauges are in monocrystalline silicon carbide.

13. Manufacturing method by micromachining at least one membrane sensing element for a pressure sensor able to operate at high temperature and to measure the pressure of a hostile medium, comprising the following steps:
- the supply of a support (20) comprising a front face (22) having a peripheral, polycrystalline silicon carbide portion and a rear face opposite to the front face,
**characterized in that** it comprises:
- the production of a monocrystalline silicon carbide layer (25) on said front face (22) of the support (20),
- the formation of means (26) for the detection of the deformation of a membrane on the free face of the monocrystalline silicon carbide layer (25),
- the production of electrical contacts (27) on the free face of the monocrystalline silicon carbide layer (25) for connecting the detection means (26) to electrical connection means,
- the formation of the membrane (28) of said sensitive element by eliminating material from the rear face of the support and in such a way as to only retain said peripheral, polycrystalline silicon carbide portion.

14. Method according to claim 13, **characterized in that** the support is a polycrystalline silicon carbide substrate (20).

15. Method according to claim 14, **characterized in that** the production of said monocrystalline silicon carbide layer (25) comprises:
- transferring a first monocrystalline silicon carbide layer to said front face of the support (20),
- depositing by epitaxy a second monocrystalline silicon carbide layer (24) on the first layer (23) in order to obtain said monocrystalline silicon carbide layer (25) with a controlled thickness.

16. Method according to claim 14, **characterized in that** the fabrication of said layer of monocrystalline silicon carbide comprises the use of a wafer in monocrystalline silicon carbide in which a layer has been defined by a layer of microcavities generated by ion implantation, said wafer being bonded to said surface of substrate (20) then cleaved at the layer of microcavities so as only to preserve said layer defined on the substrate.

17. Method according to claim 16, **characterized in that** cleavage of the wafer is obtained by coalescence of the microcavities resulting from a heat treatment.

18. Method according to either of claims 16 or 17, **characterized in that** the bonding of said wafer to substrate (20) is obtained by molecular bonding.

19. Method according to any of claims 14 to 18, **characterized in that**, before the step to produce said layer of monocrystalline silicon carbide (25), an insulating interface (21) is deposited on surface (22) of substrate (20) on which said layer (25) is to be formed.

20. Method according to any of claims 13 to 19, **characterized in that**, during the membrane (28) formation step, the removal of matter from the rear face of the support is conducted using an operation chosen from among mechanical polishing and chemical etching.

21. Method according to claim 13, **characterized in that** the stage of supplying a support comprises the following steps:
- machining a substrate (30) to obtain a boss (31) with a shape complimentary to that of the desired sensitive element seen from the side of the hostile medium,
- depositing a polycrystalline silicon carbide layer (32) on the substrate (30) on the side of boss (31),
- levelling the previously deposited layer (32) until the apex of the boss (31) is reached in order to form said front face of the support.

22. Method according to claim 21, **characterized in that** said substrate (30) is in silicon.

23. Method according to either of claims 21 or 22, **characterized in that** the fabrication of said layer (35) in monocrystalline silicon carbide comprises:
- the transfer of a first layer (33) of monocrystalline silicon carbide to the substrate,
- depositing by epitaxy a second layer (34) of monocrystalline silicon carbide on the first layer (33) of monocrystalline silicon carbide in order to obtain said layer (35) of monocrystalline silicon carbide of controlled thickness.

24. Method according to any of claims 21 to 23, **characterized in that** the levelling step is made by mechanical-chemical polishing.

25. Method according to either of claims 21 or 22, **characterized in that** the fabrication of said layer (33) of monocrystalline silicon carbide comprises the use of a wafer in monocrystalline silicon carbide in which a layer has been defined by a layer of microcavities generated by ion implantation, said wafer being bonded to substrate (30) on the side of the levelled layer then cleaved at the layer of microcavities so as only to preserve said defined layer on the substrate.

26. Method according to claim 25, **characterized in that** cleavage of the wafer is obtained by coalescence of the microcavities resulting from a heat treatment.

27. Method according to either of claims 25 or 26, **characterized in that** the bonding of said wafer to the substrate is obtained by molecular bonding.

28. Method according to any of claims 21 to 27, **characterized in that**, before the step to produce said layer of monocrystalline silicon carbide (35), an insulating interface layer is deposited on the surface of the substrate on which said layer is to be made.

29. Method according to any of claims 21 to 28, **characterized in that** removal of the initial substrate (30) is obtained by chemical etching.

30. Method according to claim 13, **characterized in that** the stage of supplying a support comprises the following steps:
- machining a substrate (40) to obtain a boss (41) with a shape complimentary to that of the desired sensitive element seen from the side of the hostile medium,
- depositing a polycrystalline silicon carbide layer (42) on the substrate (40) on the side of boss (41),
- levelling the previously deposited layer (42) until the thickness desired for the membrane in order to constitute said front face of the support is left above the boss (41).

31. Method according to claim 30, **characterized in that** said substrate (40) is in silicon.

32. Method according to either of claims 30 or 31, **characterized in that** the levelling step is made by mechanical-chemical polishing.

33. Method according to any of claims 29 to 31, **characterized in that** the fabrication of said layer of monocrystalline silicon carbide is obtained using a wafer of monocrystalline silicon carbide in which said layer has been defined by a layer of microcavities generated by ion implantation, said wafer being bonded to this substrate on the side of the levelled layer then cleaved at the layer of microcavities so as only to preserve the layer of monocrystalline silicon carbide on the substrate.

34. Method according to claim 33, **characterized in that** cleavage of the wafer is obtained by coalescence of the microcavities resulting from a heat treatment.

35. Method according to either of claims 33 or 34, **characterized in that** the bonding of said wafer to the substrate is obtained by molecular bonding.

36. Method according to any of claims 29 to 34, **characterized in that** removal of the initial substrate is obtained by chemical etching.

37. Method according to any of claims 30 to 36, **characterized in that** an insulating interface layer (43) is deposited on the levelled layer before the layer of monocrystalline silicon carbide.

38. Method according to any one of the claims 13 to 37, **characterized in that** the method is a method of collective manufacture of sensitive elements from the same substrate and there is a final step of cutting the substrate in order to obtain separate sensitive elements.

## Patentansprüche

1. Drucksensor (1, 13), fähig hohe Temperaturen auszuhalten und den Druck eines feindlichen Mediums zu messen,
**dadurch gekennzeichnet, dass** er umfasst:
- ein empfindliches Element (4) mit einer integrierten Membran (8) aus monokristallinem Siliciumkarbid, realisiert durch Mikrobearbeitung eines Substrats aus polykristallinem Siliciumkarbid, wobei eine erste Seite der Membran für den Kontakt mit dem genannten Medium bestimmt ist und eine zweite Seite der Membran Detektionseinrichtungen (9) einer Verformung der Membran umfasst, verbunden mit elektrischen Kontakten (10) für den Anschluss von elektrischen Verbindungseinrichtungen (11, 17), wobei die für den Kontakt mit dem genannten Medium bestimmten Oberflächen des empfindlichen Elements (4) in Bezug auf dieses Medium chemisch inert sind;
- einen Träger (5, 15) des empfindlichen Elements (4), der das empfindliche Element so trägt, dass die genannte erste Seite der Membran (8) mit dem genannten Medium in Kontakt gebracht werden kann und die zweite Seite der Membran (8) dem Kontakt mit dem genannten Medium entzogen ist, wobei der Träger (5, 15) aus polykristallinem Siliciumkarbid ist;
- eine Abdichtungs-Lötnaht (6) aus Siliciumkarbid enthaltendem Material zwischen dem Träger (5, 15) und dem empfindlichen Element (4), um die zweite Seite der Membran (8) vor jedem Kontakt mit dem genannten Medium zu schützen.

2. Drucksensor nach Anspruch 1, **dadurch gekennzeichnet** - wobei der Sensor zur Messung des absoluten Drucks bestimmt ist -, **dass** der Träger (15) ein hermetisches Verschlusselement (14) umfasst, um im Innern des Trägers ein Vakuum herstellen zu können.

3. Drucksensor nach einem der Ansprüche 1 oder 2, **dadurch gekennzeichnet, dass** der Träger (5, 15) rohrförmig ist, das empfindliche Element (4) eines der Enden des Rohrs verschließt, die erste Seite der Membran (8) der Außenseite des Rohrs zugewandt ist.

4. Drucksensor nach Anspruch 3, **dadurch gekennzeichnet, dass** der Träger (5, 15) ein Gewinde umfasst, das ermöglicht, ihn auf einen das Medium enthaltenden Behälter (2) zu schrauben.

5. Drucksensor nach einem der Ansprüche 1 bis 4, **dadurch gekennzeichnet, dass** er zwischen der Membran (8) und dem Substratteil des empfindlichen Elements (4) eine isolierende Grenzschicht aufweist.

6. Drucksensor nach Anspruch 5, **dadurch gekennzeichnet, dass** die isolierende Grenzschicht aus einem unter Siliciumoxid, Siliciumnitrid und kohlenstoffhaltigem Silicium ausgewählten Material ist.

7. Drucksensor nach einem der Ansprüche 1 bis 6, **dadurch gekennzeichnet, dass** die genannten elektrischen Kontakte (10) aus einem Wolfram enthaltenden Silicid sind.

8. Drucksensor nach einem der Ansprüche 1 bis 7, **dadurch gekennzeichnet, dass** die Verbindung zwischen den elektrischen Kontakten (10) und den elektrischen Verbindungseinrichtungen (17) durch ein Lötmaterial (18) hergestellt wird, das die hohen Temperaturen aushält.

9. Drucksensor nach Anspruch 8, **dadurch gekennzeichnet, dass** das genannte Lötmaterial (18) ein Wolfram enthaltendes Silicid ist.

10. Drucksensor nach einem der Ansprüche 1 bis 7, **dadurch gekennzeichnet, dass** für die Verbindung zwischen den elektrischen Kontakten (10) und den elektrischen Verbindungseinrichtungen Federn bildende leitfähige Einrichtungen (11) vorgesehen sind.

11. Drucksensor nach einem der Ansprüche 1 bis 10, **dadurch gekennzeichnet, dass** die genannten Detektionseinrichtungen (9) wenigstens zwei piezoresistive Messeinrichtungen umfassen.

12. Drucksensor nach Anspruch 11, **dadurch gekennzeichnet, dass** die genannten piezoresitiven Messeinrichtungen aus monokristallinem Siliciumkarbid sind.

13. Verfahren zur Herstellung wenigstens eines empfindlichen Membran-Elements für einen Drucksensor, fähig hohe Temperaturen auszuhalten und den Druck eines feindlichen Mediums zu messen, das die folgenden Schritte umfasst:
- die Lieferung eines Trägers (20) mit einer einen peripheren Teil aus polykristallinem Siliciumkarbid aufweisenden Vorderseite (22) und einer der Vorderseite entgegengesetzten Rückseite,
**dadurch gekennzeichnet, dass** es umfasst:
- die Realisierung einer Schicht aus monokristallinem Siliciumkarbid (25) auf der genannten Vorderseite (22) des Trägers (20),
- die Bildung von Einrichtungen (26) zur Detektion der Verformung einer Membran auf der freien Seite der Schicht (25) aus monokristallinem Siliciumkarbid,
- die Realisierung von elektrischen Kontakten (27) auf der freien Seite der Schicht (25) aus monokristallinem Siliciumkarbid, um die Detektionseinrichtungen (26) mit elektrischen Verbindungseinrichtungen zu verbinden,
- die Bildung der Membran (28) des genannten empfindlichen Elements durch Materialeliminierung, ausgehend von der Rückseite des Trägers und derart, dass nur der genannte periphere Teil aus polykristallinem Siliciumkarbid übrigbleibt.

14. Verfahren nach Anspruch 13, **dadurch gekennzeichnet, dass** der Träger ein Substrat (20) aus polykristallinem Siliciumkarbid ist.

15. Verfahren nach Anspruch 14, **dadurch gekennzeichnet, dass** die Realisierung der genannten Schicht (25) aus monokristallinem Siliciumkarbid umfasst:
- die Übertragung einer ersten Schicht aus monokristallinem Siliciumkarbid auf die genannte Vorderseite des Trägers (20),
- die Abscheidung einer zweiten Schicht (24) aus monokristallinem Siliciumkarbid durch Epitaxie auf der ersten Schicht (23), um die genannte Schicht (25) aus monokristallinem Siliciumkarbid mit kontrollierter Dicke zu erhalten.

16. Verfahren nach Anspruch 14, **dadurch gekennzeichnet, dass** die Realisierung der genannten Schicht aus monokristallinem Siliciumkarbid die Verwendung einer Platte aus monokristallinem Siliciumkarbid umfasst, bei der eine Schicht durch eine Schicht definiert worden ist, die durch Ionenimplantation erzeugte Mikrohohlräume umfasst, wobei die genannte Platte auf die genannte Vorderseite des Trägers (20) geklebt und dann in Höhe der Mikrohohlräume-Schicht gespalten wird, so dass nur die genannte definierte Schicht auf dem Substrat zurückbleibt.

17. Verfahren nach Anspruch 16, **dadurch gekennzeichnet, dass** man die Spaltung der Platte durch die aus einer thermischen Behandlung resultierende Koaleszenz der Mikrohohlräume erzielt,

18. Verfahren nach einem der Ansprüche 16 oder 17, **dadurch gekennzeichnet, dass** man das Kleben der genannten Platte auf dem Substrat (20) durch molekulare Adhäsion erzielt.

19. Verfahren nach einem der Ansprüche 14 bis 18, **dadurch gekennzeichnet, dass** man vor dem Realisierungsschritt der genannten Schicht (25) aus monokristallinem Siliciumkarbid auf der Seite (22) des Substrats (20) eine isolierende Grenzschicht (21) abscheidet, auf der man dann die genannte Schicht (25) realisiert.

20. Verfahren nach einem der Ansprüche 13 bis 19, **dadurch gekennzeichnet, dass** bei dem Schritt zur Bildung der Membran (28) die Materialeliminierung auf der Rückseite des Trägers eine zwischen mechanischer Bearbeitung und chemischer Ätzung ausgewählte Operation ist.

21. Verfahren nach Anspruch 13, **dadurch gekennzeichnet, dass** der Schritt zur Lieferung eines Trägers die folgenden Schritte umfasst:
- das Bearbeiten eines Substrats (30), um einen Buckel (31) mit einer Form zu erhalten, die von der Seite des feindlichen Mediums aus gesehen komplementär ist zu der Form des gewünschten empfindlichen Elements,
- das Abscheiden einer Schicht (32) aus polykristallinem Siliciumkarbid auf dem Substrat (30) auf der Seite des Buckels (31),
- das Abschleifen der vorhergehend abgeschiedenen Schicht (32) bis zur Oberseite des Buckels (31), um die genannte Vorderseite des Trägers zu bilden.

22. Verfahren nach Anspruch 21, **dadurch gekennzeichnet**, **dadurch gekennzeichnet, dass** das genannte Substrat (30) aus Silicium ist.

23. Verfahren nach einem der Ansprüche 21 oder 22, **dadurch gekennzeichnet, dass** die Realisierung der genannten Schicht (35) aus monokristallinem Siliciumkarbid umfasst:
- die Übertragung einer ersten Schicht (33) aus monokristallinem Siliciumkarbid auf die genannte Vorderseite des Trägers,
- die Abscheidung einer zweiten Schicht (34) aus monokristallinem Siliciumkarbid durch Epitaxie auf der ersten Schicht (33) aus monokristallinem Siliciumkarbid, um die genannte Schicht (35) aus monokristallinem Siliciumkarbid mit kontrollierter Dicke zu erhalten.

24. Verfahren nach einem der Ansprüche 21 bis 23, **dadurch gekennzeichnet, dass** der Abschleifschritt eine mechanisch-chemische Politur ist.

25. Verfahren nach einem der Ansprüche 21 oder 22, **dadurch gekennzeichnet, dass** die Realisierung der genannten Schicht (33) aus monokristallinem Siliciumkarbid die Verwendung einer Platte aus monokristallinem Siliciumkarbid umfasst, bei der eine Schicht durch eine Schicht definiert worden ist, die durch Ionenimplantation erzeugte Mikrohohlräume umfasst, wobei die genannte Platte auf der abgeschliffenen Seite auf das Substrat (30) geklebt und dann in Höhe der Mikrohohlräume-Schicht gespalten wird, so dass nur die genannte definierte Schicht auf dem Substrat zurückbleibt.

26. Verfahren nach Anspruch 25, **dadurch gekennzeichnet, dass** man die Spaltung der Platte durch die aus einer thermischen Behandlung resultierende Koaleszenz der Mikrohohlräume erzielt,

27. Verfahren nach einem der Ansprüche 25 oder 26, **dadurch gekennzeichnet, dass** man das Kleben der genannten Platte auf dem Substrat (20) durch molekulare Adhäsion erzielt.

28. Verfahren nach einem der Ansprüche 21 bis 27, **dadurch gekennzeichnet, dass** man vor dem Realisierungsschritt der genannten Schicht (35) aus monokristallinem Siliciumkarbid auf der Seite des Substrats eine isolierende Grenzschicht abscheidet, auf der man dann die genannte Schicht realisiert.

29. Verfahren nach einem der Ansprüche 21 bis 28, **dadurch gekennzeichnet, dass** man das Substrat (30) durch chemischer Ätzung eliminiert.

30. Verfahren nach Anspruch 13, **dadurch gekennzeichnet, dass** der Schritt zur Lieferung eines Trägers die folgenden Schritte umfasst:
- das Bearbeiten eines Substrats (40), um einen Buckel (41) mit einer Form zu erhalten, die von der Seite des feindlichen Mediums aus gesehen komplementär ist zu der Form des gewünschten empfindlichen Elements,
- das Abscheiden einer Schicht (42) aus polykristallinem Siliciumkarbid auf dem Substrat (40) auf der Seite des Buckels (41),
- das Abschleifen der vorhergehend abgeschiedenen Schicht (42) bis auf die für die Membran erwünschte Dicke über dem Buckel (41), um die genannte Vorderseite des Trägers zu bilden.

31. Verfahren nach Anspruch 30, **dadurch gekennzeichnet**, **dadurch gekennzeichnet, dass** das genannte Substrat (40) aus Silicium ist.

32. Verfahren nach einem der Ansprüche 30 oder 31, **dadurch gekennzeichnet, dass** der Abschleifschritt eine mechanisch-chemische Politur ist.

33. Verfahren nach einem der Ansprüche 29 bis 31, **dadurch gekennzeichnet, dass** die Realisierung der genannten Schicht aus monokristallinem Siliciumkarbid aufgrund einer Platte aus monokristallinem Siliciumkarbid erfolgt, bei der eine Schicht durch eine Mikrohohlräume umfassende Schicht definiert worden ist, erzeugt durch lonenimplantation, wobei die genannte Platte auf der abgeschliffenen Seite auf das Substrat geklebt und dann in Höhe der Mikrohohlräume-Schicht gespalten wird, so dass nur die genannte definierte Schicht auf dem Substrat zurückbleibt.

34. Verfahren nach Anspruch 33, **dadurch gekennzeichnet, dass** man die Spaltung der Platte durch die aus einer thermischen Behandlung resultierende Koaleszenz der Mikrohohlräume erzielt,

35. Verfahren nach einem der Ansprüche 33 oder 34, **dadurch gekennzeichnet, dass** man das Kleben der genannten Platte auf dem Substrat durch molekulare Adhäsion erzielt.

36. Verfahren nach einem der Ansprüche 29 bis 34, **dadurch gekennzeichnet, dass** man das Substrat durch chemischer Ätzung eliminiert.

37. Verfahren nach einem der Ansprüche 30 bis 36, **dadurch gekennzeichnet, dass** die isolierende Grenzschicht (43) auf der abgeschliffenen Schicht abgeschieden wird, bevor dort die Schicht aus monokristallinem Siliciumkarbid realisiert wird.

38. Verfahren nach einem der Ansprüche 13 bis 37, **dadurch gekennzeichnet** - wenn das Verfahren ein Verfahren zur Kollektivherstellung von empfindlichen Elementen mit einem selben Substrat ist -, **dass** das Substrat in einem finalen Schritt zerschnitten wird, um einzelne empfindliche Elemente zu erhalten.
